# EUROPEAN PATENT APPLICATION

(11) **EP 4 707 605 A1**
(43) Date of publication of application: **11.03.2026**
(21) Application number: 24810170.1
(22) Date of filing: 29.04.2024
(51) Int. Cl.: F04D 13/08, F04D 29/42, F04D 29/00, F04D 15/00

(54) **SUBMERSIBLE PUMP**

(30) Priority: 22.05.2023 CN 202310581151
(71) Applicant: NINGBO JUNHE INTELLIGENT TECHNOLOGY CO., LTD., Ningbo Zhejiang 315599 (CN)
(72) Inventor: ZHANG, Junbo, Ningbo, Zhejiang 315599 (CN); YANG, Ke, Ningbo, Zhejiang 315599 (CN)
(74) Representative: Bayramoglu et al.
(86) International application number: PCT/CN2024/090473
(87) International publication number: WO 2024/239923

(57) **Abstract**

A submersible pump (1), including a water suction assembly (11) and a housing assembly (12), where the water suction assembly (11) is disposed inside the housing assembly (12); the water suction assembly (11) includes an impeller and a motor; the housing assembly (12) is provided with a water inlet and a water outlet (14); the housing assembly (12) comprises a base (121); the base (121) is provided with a first water inlet (1213) and a second water inlet (1214); the submersible pump (1) further comprises an isolation plate (13); the isolation plate (13) is disposed on the housing assembly (12); the isolation plate (13) is configured to block at least a part of the second water inlet (1214); and the isolation plate (13) is able to be pushed by a high-speed fluid so as to change a size of a water inlet area of the second water inlet (1214). The submersible pump can automatically adjust a size of the water inlet area of the water inlet according to the water level so as to efficiently draw in an external liquid at various water levels.

## Description

### TECHNICAL FIELD

The present disclosure relates to the technical field of submersible pumps, and in particular to a submersible pump.

### BACKGROUND TECHNOLOGY

As a device used to extract groundwater to the surface, the submersible pump plays an important role in farmland irrigation, seawater lifting, fountain landscapes, and so on.

Submersible pumps include a water inlet and a water outlet. Under normal circumstances, submersible pumps draw in liquid through the water inlet and delivers it the water outlet. The water inlet area of the water inlet has an effect on the water suction efficiency of the submersible pump. In the prior art, for most submersible pumps, the water inlet area of the water inlet is generally not adjustable.

For a submersible pump with a non-adjustable water inlet area of the water inlet, the area of the water inlet is generally larger for broader applicability. When the water level is very low, the water inlet area of the water inlet is relatively too large, and the minimum water suction level of the water inlet is too high. Consequently, a gas-liquid mixture will be drawn into the pump body from the water inlet, thereby decreasing the negative pressure effect of the submersible pump, and decreasing the flow velocity of the submersible pump. As a result, the submersible pump fails to completely pump out the liquid at a low water level at the bottom of the submersible pump.

In summary, there is still room for further improvement for the submersible pump in the prior art.

### CONTENT OF THE INVENTION

To address the above technical problem, the present disclosure provides a submersible pump, which can automatically adjust the minimum water suction level of the water inlet, enabling the submersible pump to pump out water at a low water level completely.

A submersible pump includes a water suction assembly and a housing assembly, where the water suction assembly is disposed inside the housing assembly; the water suction assembly includes an impeller and a motor; and the housing assembly is provided with a water inlet and a water outlet;
the housing assembly includes a base; and the base is provided with a first water inlet and second water inlets;
the submersible pump further includes an isolation plate; the isolation plate is disposed on the housing assembly; and the isolation plate is configured to block at least one of the second water inlets; and
the isolation plate is able to be pushed by a high-speed fluid so as to change a size of a water inlet area of the water inlet.

In one aspect, the present disclosure provides a submersible pump. The isolation plate is disposed on the housing assembly. The isolation plate blocks at least one of the second water inlets. The isolation plate can be pushed under the impact of the fluid, causing the minimum water suction level of the water inlet to change. When the water level is high, the impact of the fluid on the isolation plate is great, and the blocked area of the second water inlets caused by the isolation plate is reduced. The minimum water suction level of the second water inlet is high, and the water inlet area of the second water inlet is increased, allowing the liquid to be drawn quickly in large quantities into the submersible pump. When the water level decreases, the impact of the water is small, and the isolation plate is reset. The blocked area of the second water inlets caused by the isolation plate increases, the minimum water suction level of the second water inlet is low, and the water inlet area of the second water inlet decreases. The isolation plate has a small ground clearance, reducing the amount of the gas-liquid mixture entering the pump body, thereby ensuring the suction force of the submersible pump and ensuring that the submersible pump can pump out the water at a low water level completely. The submersible pump of the present disclosure can automatically adjust the minimum water suction level and the water inlet area of the water inlet according to the flow velocity of the liquid, enabling the submersible pump to well draw in the liquid at various water levels, thereby improving the working efficiency of the submersible pump.

Furthermore, the isolation plate is made of a rigid material; and the isolation plate is movably connected to the base.

Furthermore, the isolation plate is made of a flexible material; and a Shore hardness of the isolation plate is 10-120 degrees; and
one end of the isolation plate is fixedly connected to the base.

Furthermore, the base is provided with a mounting groove; and at least a portion of the isolation plate is located in the mounting groove;
the isolation plate includes a mounting portion and an adjustment portion; the mounting portion is located inside the mounting groove; and the adjustment portion is configured to block the second water inlets; and
a thickness of the adjustment portion is less than a thickness of the mounting portion.

Furthermore, the isolation plate is provided with a limiting protrusion; and the mounting groove is provided with a limiting hole cooperating with the limiting protrusion.

Furthermore, the limiting protrusion protrudes toward an inner side of the isolation plate and extends beyond the mounting portion.

Furthermore, the base is provided with at least two second water inlets; and a support foot is provided between the second water inlets.

Furthermore, locking portions are disposed at two ends of the support foot, respectively; and locking mating portions cooperating with the locking portions are disposed at two ends of the isolation plate, respectively.

Furthermore, the locking mating portion includes a locking groove; and the locking portion includes a locking piece cooperating with the locking groove; and
a thickness of the locking mating portion is greater than a thickness of the mounting portion.

Furthermore, when the isolation plate is reset, a distance between a bottom end of the isolation plate and a bottom end of the base is L1; and
a distance between the first water inlet and the bottom end of the base is L2;
where, L2>L1>0.

In the present disclosure, the submersible pump has at least the following technical effects.

By disposing the isolation plate on the housing assembly, the isolation plate blocks at least one of the second water inlets in a natural state. The impact of the high-speed fluid can push the isolation plate, causing the blocked area of the second water inlets caused by the isolation plate to change, thereby altering the minimum water suction level and the water inlet area of the water inlet. In the present disclosure, the impact force of the fluid cooperates with the isolation plate, enabling the submersible pump to automatically adjust the water inlet area of the second water inlet according to the flow velocity of the liquid to well draw in the liquid at various water levels, thereby improving the working efficiency of the submersible pump.

The isolation plate is made of a flexible material. One end of the isolation plate is fixedly connected to the base, and the free end of the isolation plate can be deformed under the impact of a certain high-speed fluid. Furthermore, the free end can be reset when not subjected to a force, thereby changing the water inlet area of the second water inlet through the impact of the liquid on the isolation plate.

The isolation plate is made of a rigid material. One end of the isolation plate is movably connected to the housing assembly, and the free end of the isolation plate can be pushed open under the impact of the fluid, reducing the blocked area of the water inlet caused by the isolation plate, thereby changing the water inlet area of the water inlet. When the flow velocity of the fluid decreases, the isolation plate is reset. Therefore, the submersible pump can change the water inlet area of the second water inlet according to the flow rate and the flow velocity of the fluid, greatly improving the working efficiency of the submersible pump.

In another aspect, the present disclosure further provides a submersible pump, including a water suction assembly and a housing assembly, where the water suction assembly is disposed inside the housing assembly; and the housing assembly is provided with a water inlet and a water outlet;
the housing assembly includes a base; and the base is provided with a first water inlet and a second water inlet; and
the second water inlet is provided with a check valve.

Compared with the prior art, a check valve is disposed at the second water inlet of the submersible pump. When the flow rate of the liquid is large, the isolation plate is impacted open, and the check valve is opened. The minimum water suction level of the second water inlet is high, and the water inlet area of the second water inlet is increased, allowing the liquid to flow smoothly into the submersible pump. When the flow rate of the liquid is small, the check valve is closed. The water suction level of the second water inlet decreases, and the water inlet area of the second water inlet is reduced. The check valve has a one-way passage effect on the gas-liquid mixture, preventing backflow of the liquid in the submersible pump and effectively ensuring a certain suction force in the submersible pump, enabling the submersible pump to draw in the liquid at a low water level. The check valve of the submersible pump of the present disclosure can change the water inlet area of the second water inlet and the minimum water suction level of the second water inlet according to the flow rate and the flow velocity of the liquid, greatly improving the working efficiency of the submersible pump.

### DESCRIPTION OF THE DRAWINGS

FIG. 1 is a structural view of a submersible pump according to an embodiment of the present disclosure;
FIG. 2 is a cross-sectional view of the submersible pump according to an embodiment of the present disclosure;
FIG. 3 is a cross-sectional view of a connection structure between a base and an isolation plate according to an embodiment of the present disclosure;
FIG. 4 is a cross-sectional view of the base according to an embodiment of the present disclosure;
FIG. 5 is a structural view of the isolation plate according to an embodiment of the present disclosure;
FIG. 6 is a detail of A shown in FIG. 2;
FIG. 7 is a detail of B shown in FIG. 3;
FIG. 8 is a detail of C shown in FIG. 4;
FIG. 9 is a detail of D shown in FIG. 5;
FIG. 10 is a detail of E shown in FIG. 5; and
FIG. 11 is a side view of the base according to an embodiment of the present disclosure.

Reference Numerals: 1. submersible pump;
11. water suction assembly; 12. housing assembly; 13. isolation plate; and 14. water outlet;
121. base;
1211. mounting groove; 1212. limiting hole; 1213. first water inlet; 1214. second water inlet; 1215. support foot; 1216. locking portion; 1217. support rib; and 12161. locking piece; and
131. mounting portion; 132. limiting protrusion; 133. adjustment portion; 134. locking mating portion; and 1341. locking groove.

### SPECIFIC IMPLEMENTATIONS

In order for those skilled in the art to better understand the technical solution of the present disclosure, the present disclosure is described in detail clearly and completely below in combination with the drawings and embodiments. It should be understood that the specific embodiments described herein are merely intended to explain the present disclosure, rather than to limit the present disclosure.

In the description of the present disclosure, the terms such as "first" and "second" are merely intended to distinguish technical features, rather than to indicate or imply relative importance or implicitly indicate a number of the indicated technical features or implicitly indicate a sequence relationship of the indicated technical features.

It is understandable for those skilled in the art that in the disclosure of the present disclosure, terms such as "longitudinal", "transverse" "upper", "lower", "front", "rear", "left", "right" "vertical", "horizontal", "top", "bottom", "inside" and "outside" indicate the orientation or position relationships based on the drawings. They are merely intended to facilitate and simplify the description of the present disclosure, rather than to indicate or imply that the mentioned system or components must have a specific orientation or must be constructed and operated in a specific orientation. Therefore, these terms should not be construed as a limitation to the present disclosure.

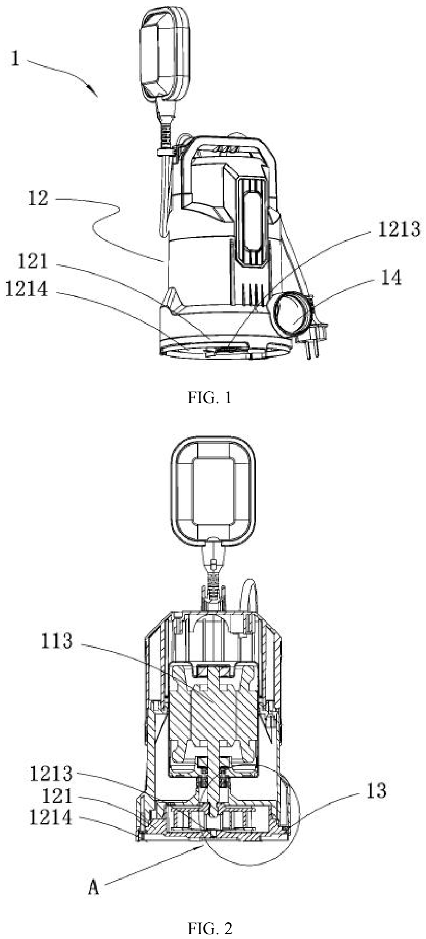

The present disclosure is described in detail below according to FIGS. 1 to 11.

This embodiment provides a submersible pump. FIGS. 1 and 2 are respectively a structural view and a cross-sectional view of submersible pump 1.

The submersible pump 1 of this embodiment includes water suction assembly 11 and housing assembly 12. The water suction assembly 11 is disposed inside the housing assembly 12. The water suction assembly 11 includes an impeller and a motor. The motor drives the impeller to rotate, thereby creating a suction force inside a pump body to draw a liquid in from a water inlet of the housing assembly 12 and then direct the drawn liquid out through water outlet 14 of the housing assembly 12. A height of the water inlet is lower than a height of the water outlet 14. In this embodiment, the connection relationship between the motor, the impeller, and an interior of the housing assembly 12 is not the inventive point of the present disclosure and will not be elaborated here.

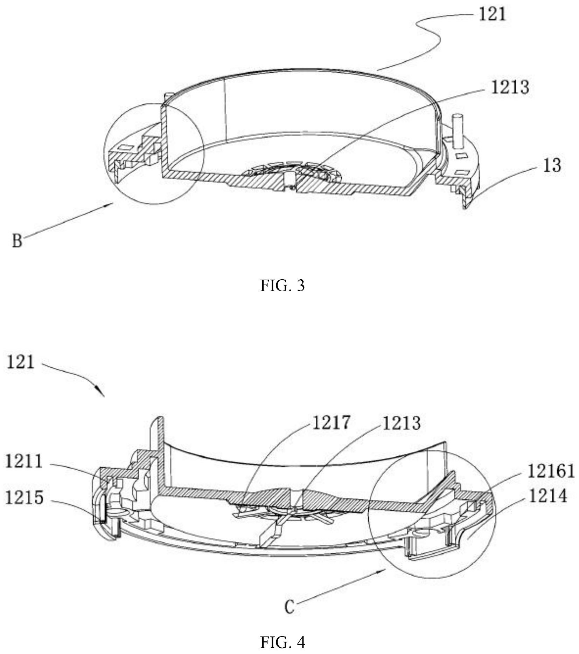

As shown in FIGS. 1 and 2, the housing assembly 12 includes base 121. The base 121 is disposed at a bottom of the water suction assembly 11. The base 121 is provided with first water inlet 1213 and second water inlets 1214. The first water inlet 1213 is disposed at a central position of the base 121. The second water inlets 1214 are disposed on an outer wall of the base 121. When the submersible pump 1 draws in water, the external liquid enters a bottom of the base 121 from the second water inlet 1214 and then enters an interior of the submersible pump 1 through the first water inlet 1213. As shown in FIG. 4, support ribs 1217 are disposed at a bottom of the housing assembly 12. The support ribs 1217 are configured to elevate the first water inlet 1213. The support ribs 1217 provide a certain height between the first water inlet 1213 and a horizontal plane, ensuring that the liquid can smoothly pass through the first water inlet 1213. There are at least two support ribs 1217. A passage for the liquid to pass through is formed between the support ribs 1217, facilitating the flow of the liquid toward the first water inlet 1213.

As shown in FIGS. 2 and 3 and FIGS. 6 and 7, the submersible pump 1 further includes isolation plate 13. The isolation plate 13 is connected to the housing assembly 12. The isolation plate 13 is configured to block at least one of the second water inlets 1214. That is, in a natural, force-free state, the isolation plate 13 blocks at least one of the second water inlets 1214 but does not completely block the second water inlets 1214. One end of the isolation plate 13 is connected to the housing assembly 12. A free end of the isolation plate 13 can be pushed by a high-speed fluid. After the isolation plate 13 is pushed, a blocked area and a minimum water suction level of the second water inlet 1214 change, enabling the isolation plate 13 to automatically and flexibly change a water inlet area of the second water inlet 1214 according to the water level and the flow velocity of the fluid (equivalent to an impact force of the fluid), greatly improving the water suction effect of the submersible pump 1.

The blocking of the second water inlet 1214 by the isolation plate 13 has three states.

In a first state, the isolation plate 13 is almost not subjected to the impact force of the fluid and is almost not pushed. Therefore, the blocked area of the second water inlets 1214 caused by the isolation plate 13 is largest, the water inlet area of the second water inlet 1214 is smallest, and the minimum water suction level of the second water inlet 1214 is lowest. The isolation plate 13 has a small ground clearance, reducing an amount of a gas-liquid mixture entering the pump body, ensuring the suction force of the submersible pump 1, and enabling the submersible pump 1 to draw in the liquid at a low water level.

In a second state, the isolation plate 13 is subjected to the impact force of the fluid, causing the isolation plate 13 to block at least one of the second water inlets 1214. The blocked area of the second water inlets 1214 is moderate, the minimum water suction level of the second water inlet 1214 is moderate, and the water inlet area of the second water inlet 1214 is moderate. Therefore, the submersible pump 1 can draw in the liquid at a medium water level.

In a third state, the isolation plate 13 is subjected to a high-speed fluid impact, causing the isolation plate 13 to be completely pushed open, and the isolation plate 13 does not block the second water inlets 1214. The minimum water suction level of the second water inlet 1214 is highest, the water inlet area of the second water inlet 1214 is largest, and the submersible pump 1 can draw in the liquid at a high water level.

Furthermore, the isolation plate 13 is made of a flexible material. A Shore hardness of the isolation plate 13 is 10-120 degrees. Within this hardness range, the isolation plate 13 can be deformed by the fluid impact, and the isolation plate 13 can be reset when not subjected to a force. Thus, the isolation plate 13 can change the blocked area of the second water inlets 1214 according to the flow velocity of the fluid, enabling the area and the minimum water suction level of the second water inlet 1214 to be automatically adjusted according to the flow velocity of the fluid. Therefore, the submersible pump 1 can draw in the liquid at different water levels, improving the working efficiency of the submersible pump 1. In this embodiment, the isolation plate 13 includes an upper end fixedly connected to the base 121 and a lower end forming the free end. The free end of the isolation plate 13 can be deformed by the fluid impact.

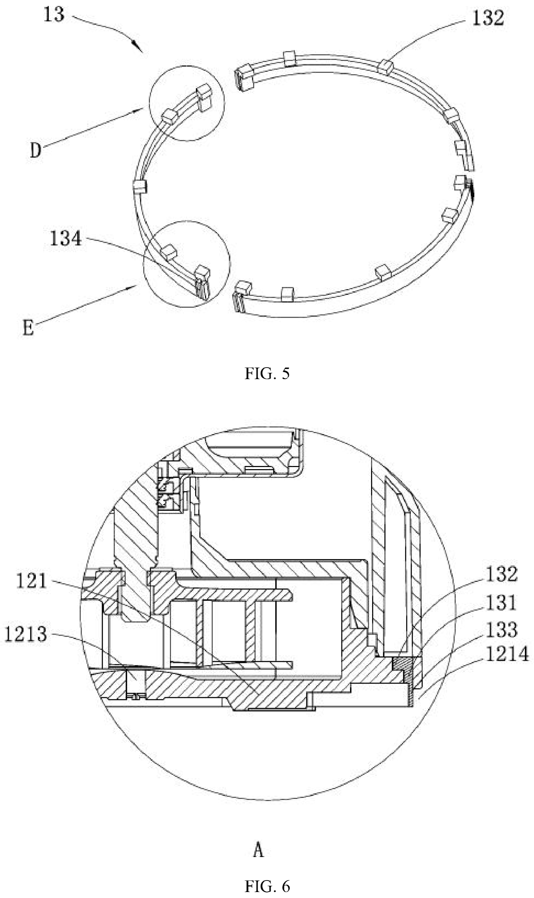

Furthermore, as shown in FIG. 6, when the isolation plate 13 is reset, a distance between a bottom end of the isolation plate 13 and a bottom end of the base 121 is L1, while a distance between the first water inlet 1213 and the bottom end of the base 121 is L2, L2>L1>0. When the isolation plate 13 is reset and is almost not subjected to a force, there is a gap between the bottom end of the isolation plate 13 and the ground. A height of this gap is the minimum water suction level of the second water inlet 1214, whose water inlet area allows the liquid at a low water level to pass through. Meanwhile, the distance from the first water inlet 1213 to the bottom end of the base 121 is greater than the distance from the isolation plate 13 to the bottom end of the base 121 when the isolation plate is reset. When the submersible pump 1 draws in the liquid at a low water level, there is a certain negative pressure effect inside the submersible pump 1, enabling the isolation plate 13 to play a certain anti-backflow role. Therefore, the submersible pump 1 has a sufficient suction force to draw out the liquid at a low water level completely. It should be noted that, in this embodiment, the bottom end of the base 121 is in contact with the ground, and the horizontal plane where the bottom end is located is regarded as the ground here.

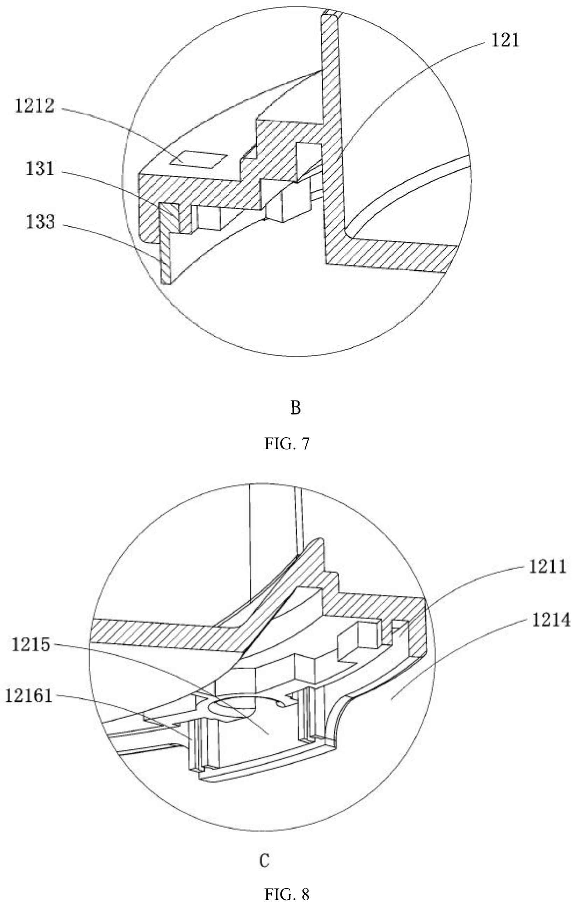

Furthermore, as shown in FIGS. 4 and 8, the base 121 is provided with mounting groove 1211, and at least a portion of the isolation plate 13 is located in the mounting groove 1211. In this embodiment, the mounting groove 1211 is located at the bottom of the base 121, and a top of the isolation plate 13 is disposed in the mounting groove 1211. The isolation plate 13 is connected to the base 121. Thus, the upper end of the isolation plate 13 is fixed, and a lower part thereof can be deformed by the fluid impact, enabling the isolation plate 13 to be stably connected to the base 121 under the impact of the fluid. As shown in FIGS. 5, 7, 9, and 10, the isolation plate 13 includes mounting portion 131 and adjustment portion 133. The mounting portion 131 is located inside the mounting groove 1211, enabling the isolation plate 13 to be connected to the base 121. The adjustment portion 133 is configured to block the second water inlets 1214. A thickness of the adjustment portion 133 is less than a thickness of the mounting portion 131, ensuring a stable connection between the isolation plate 13 and the base 121, and ensuring that the adjustment portion 133 is easily deformed under the fluid impact.

Furthermore, as shown in FIGS. 5, 7, 9, and 10, the isolation plate 13 is provided with limiting protrusion 132, and the mounting groove 1211 is provided with limiting hole 1212 cooperating with the limiting protrusion 132. The limiting protrusion 132 is disposed at the top of the isolation plate 13, and the limiting protrusion 132 is disposed in the limiting hole 1212. This increases connection stability between the isolation plate 13 and the base 121, ensuring that the connection between the isolation plate 13 and the base 121 remains stable under the fluid impact.

Furthermore, as shown in FIGS. 5, 7, 9, and 10, the limiting protrusion 132 protrudes toward an inner side of the isolation plate 13 and extends beyond the mounting portion 131. This provides upper and lower limits for the isolation plate 13, preventing the isolation plate 13 from accidentally disengaging from the base 121, thereby increasing the connection stability between the base 121 and the isolation plate 13.

Furthermore, as shown in FIGS. 1 to 4 and FIGS. 6 and 8, the base 121 is provided with at least two second water inlets 1214. Support foot 1215 is provided between the second water inlets 1214. A passage for the liquid to pass through is provided between the support feet 1215. This passage forms the second water inlet 1214, enabling the base 121 to stand stably on the ground and ensuring placement stability of the submersible pump 1.

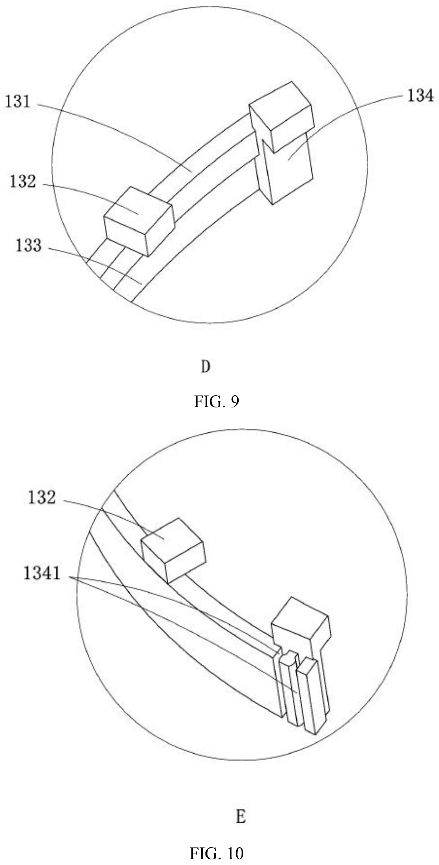

Furthermore, as shown in FIGS. 8 and 10, locking portions 1216 are disposed at two ends of the support foot 1215, respectively; and locking mating portions 134 cooperating with the locking portions 1216 are disposed at two ends of the isolation plate 13, respectively. The locking mating portions 134 cooperate with the locking portions 1216, enabling the isolation plate 13 to be stably connected to the support foot 1215, thereby ensuring a stable connection between ends of the isolation plate 13 and the base 121.

Furthermore, as shown in FIGS. 8 and 10, the locking mating portion 134 includes locking groove 1341. The locking groove 1341 includes two grooves. The two grooves are asymmetric and irregular, and a protrusion is disposed between the two grooves. The locking portion 1216 includes locking pieces 12161 cooperating with the locking groove 1341. The locking piece 12161 is inserted into the locking groove 1341. There are two locking pieces 12161, ensuring a stable and firm connection between the locking mating portion 134 and the locking portion 1216. A thickness of the locking mating portion 134 is greater than a thickness of the mounting portion 131, ensuring a stable and firm connection between the locking mating portion 134 and the locking portion 1216, and preventing the ends of the isolation plate 13 from disengaging from the support foot 1215 easily.

In another optional embodiment of the present disclosure, the isolation plate 13 is made of a rigid material, and the isolation plate 13 is movably connected to the base 121. In this embodiment, the upper end of the isolation plate 13 is movably connected to the base 121, and the lower end of the isolation plate 13 is a free end. The free end can be pushed open under the impact of the fluid, thereby reducing the blocked area of the second water inlets 1214 caused by the isolation plate 13 and increasing the water inlet area of the second water inlet 1214. When the flow velocity of the fluid decreases, the isolation plate 13 is reset, thereby increasing the blocked area of the second water inlets 1214 and lowering the water suction level of the second water inlet 1214. Therefore, the water inlet area of the submersible pump 1 is adjustable according to the flow rate and the flow velocity of the fluid, thereby greatly improving the working efficiency of the submersible pump 1. This embodiment is not shown in the drawings, but those skilled in the art can derive corresponding effects from the description.

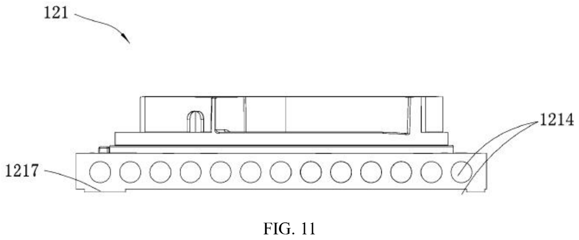

In another optional embodiment of the present disclosure, as shown in FIG. 11, the second water inlet 1214 is disposed in a side wall of the housing assembly 12. The second water inlet 1214 is divided into an upper water inlet and a lower water inlet, and the upper water inlet is circular.

The support ribs 1217 are disposed at the bottom of the housing assembly 12. A passage for the liquid to flow through is provided between the support ribs 1217, and this passage forms the lower water inlet of the second water inlet 1214. As shown in FIG. 11, a check valve is disposed at the upper water inlet. In this embodiment, when the flow rate of the liquid is large, the check valve is opened, and the water inlet area of the second water inlet 1214 is relatively large. The liquid flows smoothly into the submersible pump 1 from the upper water inlet and the lower water inlet. When the flow rate of the liquid is small, the check valve is closed, and the upper water inlet is closed. The liquid enters the submersible pump 1 from the lower water inlet, and the minimum water suction level and the water inlet area of the second water inlet 1214 decrease. The check valve has a one-way passage effect on the gas-liquid mixture, preventing backflow of the liquid in the submersible pump 1 and effectively achieving a certain suction force in the submersible pump 1. Thus, the submersible pump 1 can draw in the liquid at a low water level. In the present disclosure, the check valve of the submersible pump 1 can change the water inlet area of the second water inlet 1214 according to the flow rate and the flow velocity of the liquid, greatly improving the working efficiency of the submersible pump 1.

Furthermore, in this embodiment, the isolation plate 13 is disposed in the check valve. One end of the isolation plate 13 is connected to a spring, enabling the isolation plate 13 to be pushed open by the fluid impact to open the check valve. This design increases the water inlet area of the second water inlet 1214, allowing the fluid to flow from the second water inlet 1214 into the pump body in large quantities and quickly. When the flow rate of the liquid is small, the isolation plate 13 is reset, the check valve is closed, the water inlet area of the second water inlet 1214 decreases, and the external liquid flows into the submersible pump 1 from the lower water inlet of the second water inlet 1214.

The following is an operating process of the submersible pump 1 in an embodiment of the present disclosure.

As shown in FIG. 6, when the submersible pump 1 is working, if the submersible pump 1 is at a high water level, the external liquid flows toward the interior of the submersible pump 1 under the action of the suction force. Since the impact force of the external fluid is large, the isolation plate 13 is pushed and deformed. The isolation plate 13 does not block the second water inlets 1214 or its blocking effect on the second water inlet 1214 is small. The minimum water suction level of the water inlet is high, and the water inlet area of the second water inlet 1214 is large. The external liquid can pass through the second water inlet 1214 quickly and in large quantities, and then flow from the first water inlet 1213 at a center of the base 121 into the submersible pump 1 and out through the water outlet 14 of the submersible pump 1.

When the external liquid is gradually pumped out, the water level gradually decreases, and the impact force of the external liquid on the isolation plate 13 gradually decreases until it is almost nonexistent. When the external liquid has no impact on the isolation plate 13, the isolation plate 13 is reset. At this time, the blocked area of the second water inlets 1214 caused by the isolation plate 13 is largest, the minimum water suction level of the water inlet decreases, the water inlet area of the second water inlet 1214 is smallest, and the isolation plate 13 has a small ground clearance. This reduces the amount of the gas-liquid mixture entering the pump body, thereby ensuring the suction force of the submersible pump 1 and enabling the submersible pump 1 to pump out water at a low water level completely.

The present disclosure is described in detail above. Specific cases are used herein to illustrate the principle and implementation of the present disclosure, and the description of the above embodiments is only intended to help understand the core idea of the present disclosure. It should be noted that several improvements and modifications may also be made by those of ordinary skill in the art without departing from the principles of the present disclosure, which also fall within the protection scope defined by the claims of the present disclosure.

## Claims

1. A submersible pump, **characterized in** comprising: a water suction assembly (11) and a housing assembly (12), wherein the water suction assembly (11) is disposed inside the housing assembly (12); the water suction assembly (11) comprises an impeller and a motor; and the housing assembly (12) is provided with a water inlet and a water outlet (14);
the housing assembly (12) comprises a base (121); and the base (121) is provided with a first water inlet (1213) and a second water inlet (1214);
the submersible pump (1) further comprises an isolation plate (13); the isolation plate (13) is disposed on the housing assembly (12); and the isolation plate (13) is configured to block at least a part of the second water inlet (1214); and
the isolation plate (13) is able to be pushed by a high-speed fluid so as to change a size of a water inlet area of the water inlet.

2. The submersible pump according to claim 1, **characterized in that**
the isolation plate (13) is made of a rigid material; and the isolation plate (13) is movably connected to the base (121).

3. The submersible pump according to claim 1, **characterized in that**
the isolation plate (13) is made of a flexible material; and a Shore hardness of the isolation plate (13) is 10-120 degrees; and
one end of the isolation plate (13) is fixedly connected to the base (121).

4. The submersible pump according to claim 3, **characterized in that**
the base (121) is provided with a mounting groove (1211); and at least a portion of the isolation plate (13) is located in the mounting groove (1211);
the isolation plate (13) comprises a mounting portion (131) and an adjustment portion (133); the mounting portion (131) is located inside the mounting groove (1211); and the adjustment portion (133) is configured to block the second water inlet (1214); and
a thickness of the adjustment portion (133) is less than a thickness of the mounting portion (131).

5. The submersible pump according to claim 4, **characterized in that**
the isolation plate (13) is provided with a limiting protrusion (132); and the mounting groove (1211) is provided with a limiting hole (1212) cooperating with the limiting protrusion (132).

6. The submersible pump according to claim 5, **characterized in that**
the limiting protrusion (132) protrudes toward an inner side of the isolation plate (13) and extends beyond the mounting portion (131).

7. The submersible pump according to any one of claims 1 to 6, **characterized in that**
the base (121) is provided with at least two second water inlets (1214); and a support foot (1215) is provided between the second water inlets (1214).

8. The submersible pump according to claim 7, **characterized in that**
locking portions (1216) are disposed at two ends of the support foot (1215), respectively; and locking mating portions (134) cooperating with the locking portions (1216) are disposed at two ends of the isolation plate (13), respectively.

9. The submersible pump according to claim 8, **characterized in that**
the locking mating portion (134) comprises a locking groove (1341); and the locking portion (1216) comprises a locking piece (12161) cooperating with the locking groove (1341); and
a thickness of the locking mating portion (134) is greater than a thickness of the mounting portion (131).

10. The submersible pump according to claim 9, **characterized in that**
when the isolation plate (13) is reset, a distance between a bottom end of the isolation plate (13) and a bottom end of the base (121) is L1; and
a distance between the first water inlet (1213) and the bottom end of the base (121) is L2;
wherein, L2>L1>0.

11. A submersible pump, **characterized in** comprising: a water suction assembly (11) and a housing assembly (12), wherein the water suction assembly (11) is disposed inside the housing assembly (12); and the housing assembly (12) is provided with a water inlet and a water outlet (14);
the housing assembly (12) comprises a base (121); and the base (121) is provided with a first water inlet (1213) and a second water inlet (1214); and
the second water inlet (1214) is provided with a check valve.
